# EUROPÄISCHE PATENTSCHRIFT

(11) **EP 2 469 885 B1**
(45) Veröffentlichungstag und Bekanntmachung des Hinweises auf die Patenterteilung: **14.05.2014**
(21) Anmeldenummer: 11006516.6
(22) Anmeldetag: 08.08.2011
(51) Int. Cl.: H04Q 3/62

(54) **Verfahren zur Integration von Funktionen eines Telekommunikationsnetzes in ein Datennetz**
Method for integrating functions of a telecommunications network in a data network
Procédé d'intégration de fonctions d'un réseau de télécommunication dans un réseau de données

(30) Priorität: 23.12.2010 EP 10016048
(43) Veröffentlichungstag der Anmeldung: 27.06.2012
(73) Patentinhaber: Unify GmbH & Co. KG, 81379 München (DE)
(72) Erfinder: Rist, Claus, 44795 Bochum (DE)
(74) Vertreter: Fritzsche, Thomas

(56) Entgegenhaltungen:
- EP-A1- 1 345 457
- EP-A1- 2 224 667
- WO-A1-98/51092
- WO-A1-02/080493
- WO-A1-2007/041441
- DE-B4- 10 159 636

## Beschreibung

Die Erfindung betrifft ein Verfahren zur Integration von Funktionen eines Telekommunikationsnetzes in ein Datennetz. Telekommunikationsnetze dienen hauptsächlich der Kommunikation von Telekommunikationsteilnehmern mit Hilfe von Telekommunikationsendgeräten wie beispielsweise Telefonen. Datennetze dienen hauptsächlich der Vernetzung von Computern, beispielsweise von PCs mit sogenannten Servern. Verfahren und Anordnungen, bei denen auf Computern installierte Anwendungen Kommunikationsanlagen und Kommunikationsverbindungen steuern und überwachen, sind allgemein als CTI-Lösungen (CTI = Computer Telephony Integration) bekannt. Dabei können einerseits Anschlüsse von Kommunikationsanlagen und andererseits Verbindungen zwischen den Anschlüssen gesteuert und überwacht werden. Bei den Verbindungen handelt es sich jeweils um temporäre Kommunikationskanäle zwischen zwei oder mehreren Teilnehmern einer Kommunikationsanlage oder mehrerer Kommunikationsanlagen.

Beim Betrieb einer CTI-Lösung werden jeweils Daten mit Steuer- und Zustandsinformationen zwischen einer Kommunikationsanlage und einer CTI-Anwendung (CTI-Anwendungsprogramm) übertragen. Dazu verfügen die Kommunikationsanlagen über spezielle Schnittstellen zum Austausch der Daten, die CTI-Schnittstellen. Ebenso verfügen die Anwendungen bzw. die PCs über eine entsprechende CTI-Schnittstelle für diesen Datenaustausch. Hierzu sind die CTI-Schnittstellen der Kommunikationsanlage und die der Anwendung über eine Datenleitung oder über ein Datennetz miteinander verbunden. Da die maximale Anzahl von CTI-Schnittstellen an einer Kommunikationsanlage beschränkt ist, wird zwischen der Kommunikationsanlage und den Anwendungen ein häufig ein Telefonie-Server geschaltet.

Die Druckschrift WO 98/51092 A1 "Computer telephony integration gateway" zeigt ein öffentliches Kommunikationsnetzwerk mit mehreren Kommunikationsanlagen und ein privates Kommunikationsnetzwerk mit mehreren Domänen, die jeweils Rechner mit Anwendungen zur Steuerung und/ oder Überwachung von Ressourcen des öffentlichen Kommunikationsnetzwerks aufweisen. Die gezeigte Anordnung weist als Umwertungseinrichtung einen "CTI-Gateway" auf, welches die zur Steuerung und/oder Überwachung der Ressourcen vom öffentlichen Kommunikationsnetzwerk zum privaten Kommunikationsnetzwerk versendeten Daten derart verändert, dass sich diese Daten als die Daten einer einzigen öffentlichen Kommunikationsanlage darstellen, und umgekehrt die Daten, die vom privaten Kommunikationsnetzwerk mit den Anwendungen zum öffentlichen Kommunikationsnetzwerk versendet werden, derart verändert, als ob sie aus einem privaten Kommunikationsnetzwerk mit nur einer Anwendung gesendet worden wären.

Die DE 000010159636 B4 beschreibt ein Verfahren zur Steuerung und/oder Überwachung von Ressourcen und Verbindungen mittels Austausch von Daten zwischen Kommunikationsanlagen und mindestens einer Anwendung, wobei die Daten jeweils ein die Ressourcen und Verbindungen unterscheidendes Kennzeichen aufweisen, wobei die Kennzeichen der Ressourcen beim Austausch jeweils derart umgewertet werden, dass sie sich für die eine oder jede Anwendung als Kennzeichen einer einzigen Kommunikationsanlage mit Teilnehmeranschlüssen darstellen, dadurch gekennzeichnet, dass die Kennzeichen der Verbindung zwischen Ressourcen von verschiedenen Kommunikationsanlagen jeweils eine lokale Verbindungsnummer (Call-ID) der an der Verbindung beteiligten Kommunikationsanlagen und eine globale Verbindungsnummer (Call-ID) umfassen und dass durch die Umwertung die globale Verbindungsnummer (Call-ID) so zur Anwendung übertragen wird, dass diese von der Anwendung nicht von einer lokalen Verbindungsnummer (Call-ID) unterscheidbar ist.

Eine Aufgabe der vorliegenden Erfindung kann darin gesehen werden, andere Lösungen für die Integration von Funktionen eines Telekommunikationsnetzes in ein Datennetz anzugeben. Diese Aufgabe wird durch ein Verfahren nach Anspruch 1 gelöst. Vorteilhafte Weiterbildungen der Erfindung sind Gegenstand von Unteransprüchen.

Erfindungsgemäß ist ein Verfahren zur Integration von Funktionen eines Telekommunikationsnetzes in ein Datennetz vorgesehen, bei dem ein Vermittlungssystem (PBX) des Telekommunikationsnetzes mit einem IM-Server (XS) des Datennetzes über eine Einrichtung (CCGW) verbunden wird, mit deren Hilfe der IM-Server in die Lage versetzt wird, Computer-Telefonie-Integrations-Dienste des Vermittlungssystems (PBX) einem Kommunikationsteilnehmer des Datennetzes zur Verfügung zu stellen. Hierbei bewirkt die Einrichtung (CCGW) eine dynamische Zuordnung zwischen einer CSTA-spezifischen InvokelD (CSTA-IID) einerseits und einem Jabber-Identifier (JID) eines IM-Clients und/oder einer XMPP-SessionID (XSID). Der IM-Client ist vorzugsweise eine XMPP Client.

Der XMPP Client abonniert vorzugsweise über den XMPP Server CTI Dienste vorzugsweise bei einer PBX (Private branch exchange), welche die Funktionalität dieser Dienste vorzugsweise über ein Call Control Gateway (CCGW) zur Verfügung stellt. Das CCGW ist erfindungsgemäß eine bevorzugte Verbindung zwischen der CTI einer PBX und dem XMPP Server. Da CSTA (Computer Supported Telecommunication Applications) eine eindeutige InvokelD per Service benötigt, stellt sich zunächst die Aufgabe der Umsetzung einer clientspezifischen über XMPP erzeugten CSTA InvokelD auf eine eindeutige CSTA spezifische InvokelD. Um diese Aufgabe zu lösen erfolgt vorzugsweise ein Mapping der CSTA spezifischen InvokelD auf das Tupple Jabber ID (JID) des XMPP Clients und der XMPP SessionID. Dieses Mapping ermöglicht eine eindeutige Zuordnung zur CSTA Invoke ID zu erhalten ohne die Übertragung und Synchronisierung der CSTA Invoke ID innerhalb von XMPP zu fordern.

Die Erfindung ist mit Vorteilen in der Funktionalität und in der Benutzungsobertläche verbunden. Die dynamische Zuordnung von CTI-Diensten innerhalb einer XMPP Umgebung ermöglicht die sogenannte Third Party Call Control (Rufsteuerung durch Dritte) im XMPP Umfeld. Ein manuelles Nachregeln ist nicht mehr erforderlich. Eine gegenüber dem Stand der Technik vereinfachte Präsenzverwaltung und CTI Integration erspart Zeit und die damit verbundenen Kosten.

In diesem Zusammenhang ist unter einem Telekommunikationsnetz eine Einrichtung zu verstehen, die eine Kommunikation von Teilnehmern über sogenannte Vermittlungssysteme unterstützt. Wichtige Beispiele für solche Telekommunikationsnetze sind Netze mit Leitungsvermittlung, insbesondere Telefonnetze. Die Leitungsvermittlung (auch Durchschaltevermittlung, engl. circuit switching, line switching) in der Telekommunikation ist ein Verfahren der Vermittlungstechnik, bei dem einer Nachrichtenverbindung zeitweilig ein durchgeschalteter Übertragungskanal mit konstanter Bandbreite zugeordnet wird, der dieser Verbindung dann zur exklusiven Nutzung zur Verfügung steht, auch wenn keine Informationen übertragen werden (http://de.wikipedia.org/wiki/Leitungsvermittlung). Das wohl bekannteste Netz, das Verbindungen mit Leitungsvermittlung herstellt, ist das klassische Telefonnetz.

Die Verbindung wird im Regelfall aufgrund der von der rufenden Endstelle eingegebenen Zielinformation aufgebaut, bevor der eigentliche Nachrichtenaustausch beginnen kann. Nach Beenden des Nachrichtenaustausches erfolgt ein Abbau der Verbindung. Die Steuerung des Auf- und Abbaus der Nachrichtenverbindungen wird von den Vermittlungsstellen vorgenommen. Sie tauschen zu diesem Zweck mit den Endstellen bzw. untereinander Steuerinformationen aus, was als Zeichengabe oder Signalisierung bezeichnet wird. Mit Hilfe dieser Steuerinformationen werden die Aufgaben der Wegesuche, Verkehrslenkung und Koppelfeld-Durchschaltung durchgeführt.

Da die Vermittlungsstellen alle nötigen Informationen während des Verbindungsaufbaus erfahren, müssen die Nachrichten bei aufgebauter Verbindung auf den Zwischenstationen nicht zwischengespeichert (engl. Store and forward) werden und keine zusätzlichen Zielinformationen enthalten. Die Leitungsvermittlung hat den Vorteil, dass Dienstgüten im Hinblick auf die Übertragungsgeschwindigkeit jederzeit eingehalten werden können und die Signallaufzeiten konstant sind, d. h. es treten nur Verzögerungen bekannter und konstanter Laufzeit zwischen Sender und Empfänger auf. Allerdings ist der Verbindungsaufbau zeitintensiv. Kommunikationsbeziehungen mit mehreren Partnern bedürfen eines wiederholten Aufbaus und beide Teilnehmer müssen mit gleicher Kapazität senden und empfangen.

Eine Virtuelle Verbindung (engl. Virtual circuit) kann auf paketvermittelnder Technologie und der Emulation einer Leitungsvermittlung basieren. Dabei wird eine Verbindung aufgebaut und die Pakete in der richtigen Reihenfolge übertragen.

Aufwändigere Mechanismen als die Leitungsvermittlung benutzen die Paketvermittlung, bei der ein Übertragungskanal nicht exklusiv für eine Nachrichtenverbindung sondern für mehrere Verbindungen gleichzeitig benutzt wird. Eine Kombination von Leitungs- und Paketvermittlung benutzten frühe Paketnetze wie z.B. Datex-P.

In diesem Zusammenhang ist unter einem Datennetz ein Netz zur Übertragung von Daten zwischen Computern zu verstehen. Datennetze arbeiten vorzugsweise nach dem Prinzip der Paketvermittlung. Die Paketvermittlung (engl. packet switching) ist ein spezielles Verfahren der Speichervermittlung in einem Netz. Hierbei werden längere Nachrichten in einzelne Datenpakete unterteilt und als Datagramm über eine vorher aufgebaute virtuelle Verbindung übermittelt. Somit ist die Paketvermittlung eine Methode der Nachrichtenvermittlung.

Bei der Paketvermittlung durchqueren die Pakete als unabhängige und eigenständige Einheiten das Netz und können in den Vermittlungsknoten zwischengespeichert werden. Dies ist ein wesentlicher Vorteil, da nun die Übertragungsgeschwindigkeit zwischen einzelnen Teilstrecken keine Begrenzung mehr darstellt. Allerdings erscheint die Architektur als ein Netzwerk von Warteschlangen. Jeder zu passierende Netzknoten empfängt das Paket und leitet es an seine Ausgangsschnittstelle, die aber Ziel vieler Sendungen sein kann, so dass die Neigung zu Überlastsituationen entsteht. Die Existenz der Warteschlangen erzeugt einerseits Verzögerungen in der Paketzustellung oder Paketverluste, die eine Retransmission und damit eine weitere Belastung des Übertragungsweges zur Folge haben. Für den Anwender ist dieser Ablauf transparent. Er benötigt und erhält keinerlei Informationen über den Übertragungsweg. Im Regelfall kann er diese Informationen auch nicht erlangen, da sich Übertragungswege dynamisch ändern.

In diesem Zusammenhang ist unter einem Vermittlungssystem ein Knoten innerhalb eines Telekommunikationsnetzes zu verstehen. Wichtige Beispiele von Vermittlungssystemen sind Vermittlungseinrichtungen in Telefonnetzen, Telefonanlagen oder Nebenstellenanlagen.

In diesem Zusammenhang ist unter einem IM-Server ein sogenannter Instant Messaging Server oder eine funktional entsprechende Einrichtung zu verstehen. Instant Messaging (kurz IM) (englisch für "sofortige Nachrichtenübermittlung") oder Nachrichtensofortversand ist eine Kommunikationsmethode (http://de.wikipedia.org/wiki/Instant-Messaging), bei der sich zwei oder mehr Teilnehmer per Textnachrichten unterhalten (was auch als "chatten" bezeichnet wird). Dabei geschieht die Übertragung im Push-Verfahren, so dass die Nachrichten unmittelbar beim Empfänger ankommen. Die Teilnehmer müssen dazu mit einem Computerprogramm (dem sog. "Client") über ein Netzwerk wie das Internet direkt oder über einen Server, den IM-Server oder Instant Messaging Server, mit einander verbunden sein. Viele Clients unterstützen zusätzlich die Übertragung von Dateien und Audio- und Video-Streams. Benutzer können sich gegenseitig in ihrer Kontaktliste führen und sehen dann an der Präsenzinformation, ob der andere zu einem Gespräch bereit ist.

Wichtige Beispiele für IM-Server sind sog. XMPP-Server. Das Extensible Messaging and Presence Protocol (XMPP; "erweiterbares Nachrichten- und Anwesenheitsprotokoll") (früher Jabber, englisch "(daher-)plappern") ist ein von der IETF als RFC 6120-6122 sowie 3922, 3923 veröffentlichter Internetstandard für XML-Routing. XMPP folgt dem XML-Standard und wird primär für Instant Messaging eingesetzt. Erweiterungen von XMPP stellen die von der XSF veröffentlichten XMPP Extension Protokolls dar (http://de.wikipedia.org/wiki/Extensible_Messaging_and_Presence_Protocol).

In diesem Zusammenhang ist unter einem Computer-Telephonie-Integrationsdienst ein Dienst zu verstehen, mit dem eine Verknüpfung von Telekommunikation mit elektronischer Datenverarbeitung erreicht wird (http://de.wikipedia.org/wiki/Computer_Telephony_Integration). Die CTI ermöglicht, aus Computerprogrammen heraus den automatischen Aufbau, die Annahme und Beendigung von Telefongesprächen, den Aufbau von Telefonkonferenzen, das Senden und Empfangen von Faxnachrichten, Telefonbuchdienste, sowie die Weitervermittlung von Gesprächen.

Über eine automatische Anruferidentifikation kann der passende Datensatz aus einer Datenbank mit Kundendaten auf einen Bildschirm gebracht werden. Weiterhin können CTI-Programme (je nach Anbieter) ein Journal über die geführten Gespräche führen. Diese Technologie wird vor allem von Call Centern genutzt.

Es wird zwischen Einzelplatzlösungen (First Party Call Control) und Mehrplatzlösungen (Third Party Call Control) unterschieden. Bei Einzelplatzlösungen ist das Telefon entweder im Computer integriert oder direkt mit diesem verbunden. Bei Mehrplatzlösungen ist in der Regel ein spezieller Server zwischen dem Computernetz und dem Telefonnetz beziehungsweise der Telefonanlage geschaltet, der die Kontrolle über das Telefon übernimmt. Die Computer Telephony Integration ist ein Leistungsmerkmal, das von vielen Telefonanlagen unterstützt wird.

Computer Supported Telecommunications Applications (CSTA) ist der Name einer von der ECMA standardisierten Protokollspezifikation, die für den Datenverkehr zwischen einer Telefonanlage und Computerprogrammen verwendet wird. Die Protokollspezifikation ist wie viele andere Protokolle in der Telekommunikation in ASN.1 verfasst. Das CSTA-Protokoll definiert nur die übertragenen Daten, nicht jedoch die Transport-Schicht. Zur Codierung der Datenströme werden Basic Encoding Rules (CSTA Phase 1, II, und III) sowie XML Encoding Rules (CSTA Phase III) verwendet. Das CSTA-Protokoll kann über verschiedene Medien (Seriell, ISDN, TCP/IP) transportiert werden.

Die neueste Variante ist uaCSTA (ECMA Technical Report TR/87). Diese für sogenannte User Agents eingeführte Variante wurde mit einem eingeschränkten Umfang geschaffen, das ausschließlich XML zur Codierung verwendet.

Gemäß einer bevorzugten Ausführungsform der Erfindung, deren Merkmale auch mit Merkmalen anderer Ausführungsformen kombiniert werden können, ist ein Verfahren vorgesehen, bei dem der IM-Server in die Lage versetzt wird, Computer-Telefonie-Integrations-Dienste des Vermittlungssystems (PBX) einem Kommunikationsteilnehmer des Datennetzes zur Verfügung zu stellen, indem er einen IM-Client (XC) in die Lage zu versetzt, solche Computer-Telefonie-Integrations-Dienste des Vermittlungssystems (PBX) zu abonnieren.

In diesem Zusammenhang ist unter einem IM-Client (XC) oder Instant Messaging Client ein Computerprogramm zu verstehen, das im Rahmen eines Instant Messaging Dienstes Kontakt zu einem anderen Computerprogramm, dem IM-Server, aufnimmt, um dessen Dienstleistung zu nutzen. Das zugrundeliegende Client-Server-Modell ermöglicht, Aufgaben auf Computer in einem Rechnernetz zu verteilen und dadurch viele der Hosts von Aufgaben zu entlasten. Ein Client löst eine bestimmte Aufgabe nicht selbst, sondern lässt sie vom Server erledigen, der dafür einen Dienst anbietet.

Gemäß einer weiteren bevorzugten Ausführungsform der Erfindung, deren Merkmale auch mit Merkmalen anderer Ausführungsformen kombiniert werden können, ist ein Verfahren vorgesehen, bei dem die Einrichtung (CCGW) eine Zuordnung zwischen einer CSTA-spezifischen InvokelD (CSTA-IID) einerseits und einem Jabber-Identifier (JID) des IM-Clients und/oder einer XMPP-SessionlD (XSID) bewirkt.

In diesem Zusammenhang ist unter einer CSTA-spezifischen InvokelD (CSTA-IID) ein Identifikator zu verstehen, der im Rahmen des CSTA verwendet wird, um eine Anfrage (Request) mit einer Antwort (Response) zu verbinden (CSTA Services Interface Programming Guide, www.ctiforum.com/factory/Dialogic/ct.../cstaprog.pdf).

In diesem Zusammenhang ist unter einem Jabber-Identifier ein Identifikator, der die Adressierung einer "Entität" (hier ein realer Benutzer, ein Bot, ein XMPP-Server, ein Dienst oder eine Mischung aus vorgenanntem) innerhalb eines XMPP-Netzwerkes ermöglicht (http://de.wikipedia.org/wiki/Jabber Identifier). Er hat die Form alice@example.com/home und erinnert dabei an eine E-Mail-Adresse: Der erste Teil der Adresse ist der node (hier alice), der einen Benutzernamen angibt. Dieser ist optional, jedoch fehlt er i. d. R. nur bei Servern oder Diensten. Darauf folgt durch ein "@" getrennt, die Domain (hier example.com, alternativ auch IP-Adresse), die den XMPP-Server bestimmt, auf dem der Account registriert ist. Ebenfalls optional ist die Angabe einer Ressource (hier home), die nach einem "/" folgt. Diese Zeichenkette ist vom Benutzer frei wählbar.

Eine Jabber ID, die aus node und domain (beispielsweise in der Form alice@example.com<alice@example.com» besteht wird auch als Bare-Jabber ID bezeichnet. Fügt man dieser Bare-Jabber ID zusätzlich noch die Resource hinzu (bspw. alice@example.com<alice@example.com>/home), so nennt man diese Full-Jabber ID. "Der Full-Jabber Identifier wird im Folgenden auch gekürzt als Jabber Identifier, Jabber ID oder als JID bezeichnet."

Gemäß einer weiteren bevorzugten Ausführungsform der Erfindung, deren Merkmale auch mit Merkmalen anderer Ausführungsformen kombiniert werden können, ist ein Verfahren vorgesehen, bei dem die Kommunikation zwischen der Einrichtung (CCGW) und dem IM-Server als eine Server-Server-Anbindung ausgeführt wird.

Gemäß einer weiteren bevorzugten Ausführungsform der Erfindung, deren Merkmale auch mit Merkmalen anderer Ausführungsformen kombiniert werden können, ist ein Verfahren vorgesehen, bei dem die Kommunikation zwischen der Einrichtung (CCGW) und dem IM-Server als eine Server-Client-Anbindung ausgeführt wird.

Gemäß einer weiteren bevorzugten Ausführungsform der Erfindung, deren Merkmale auch mit Merkmalen anderer Ausführungsformen kombiniert werden können, ist ein Verfahren vorgesehen, bei dem die Kommunikation zwischen der Einrichtung (CCGW) und dem IM-Server über eine Serverkomponente gemäß XEP 0114 oder einem anderen zu XEP 0114 vergleichbaren Jabber-Component-Protocol ausgeführt wird. Das Jabber-Component-Protocol wird in dem Dokument http://xmpp.org/extensions/xep-0114.html der XMPP Standards Foundation definiert.

Gemäß einer weiteren bevorzugten Ausführungsform der Erfindung, deren Merkmale auch mit Merkmalen anderer Ausführungsformen kombiniert werden können, ist ein Verfahren vorgesehen, bei dem zur Zuordnung eines Requests zur zugehörigen Response die sogenannte Invoke-ID verwendet wird.

Gemäß einer weiteren bevorzugten Ausführungsform der Erfindung, deren Merkmale auch mit Merkmalen anderer Ausführungsformen kombiniert werden können, ist ein Verfahren vorgesehen, bei dem die zur Zuordnung eines Requests zur zugehörigen Response verwendete Invoke-ID über alle Requests eindeutig ist.

Der Umfang an CSTA Invoke-lDs ist beschränkt und wird zyklisch vergeben. Die Eindeutigkeit dieses Identifiers ergibt sich daraus, dass eine CSTA Request mit einer freien Invoke-ID versehen wird, die verwendete Invoke-ID wird daraufhin als verwendet markiert und solange nicht für einen weiteren Request verwendet, wie keine CSTA Response mit der entsprechenden Invoke-ID empfangen wurde. Nach Erhalt einer CSTA Response wird die dort enthaltene Invoke-ID wieder freigegeben und steht für eine erneute Verwendung zur Verfügung.

Gemäß einer weiteren bevorzugten Ausführungsform der Erfindung, deren Merkmale auch mit Merkmalen anderer Ausführungsformen kombiniert werden können, ist ein Verfahren vorgesehen, bei dem zum Transport von CSTA über XMPP IQ-Stanzas verwendet werden, die einen Request-Response-Mechanismus aufweisen, der dem von CSTA verwendeten Request-Response-Mechanismus vergleichbar ist. Der Begriff des XMPP IQ-Stanza wird in dem Dokument http://xmpp.org/rfcs/rfc3920.html der Network Working Group der Jabber Software Foundation näher definiert.

Gemäß einer weiteren bevorzugten Ausführungsform der Erfindung, deren Merkmale auch mit Merkmalen anderer Ausführungsformen kombiniert werden können, ist ein Verfahren vorgesehen, bei dem ein IM-Client eine XMPP-Session-ID generiert, die von anderen XMPP-Session-lDs desselben IM-Clients verschieden ist.

Im Folgenden wird die Erfindung anhand bevorzugter Ausführungsbeispiele und mit Hilfe einer Figur erläutert. Dabei zeigt
Figur 1 in schematischer Weise eine erste Anordnung von Systemkomponenten zur Durchführung eines Ausführungsbeispiels eines erfindungsgemäßen Verfahrens;
Figur 2 in schematischer Weise eine zweite Anordnung von Systemkomponenten zur Durchführung eines Ausführungsbeispiels eines erfindungsgemäßen Verfahrens;
Figur 3 in schematischer Weise die dynamische Zuordnung der XMPP Jabber ID und XMPP Session ID zur CSTA Invoke-ID anhand eines Ausführungsbeispiels eines erfindungsgemäßen Verfahrens;
Figur 4 in schematischer Weise erste Aspekte des Ablaufs eines erfindungsgemäßen Verfahrens anhand eines Ausführungsbeispiels;
Figur 5 in schematischer Weise zweite Aspekte des Ablaufs eines erfindungsgemäßen Verfahrens anhand eines Ausführungsbeispiels.

Bekannte XMPP basierende Client/Server Architekturen laufen asynchron zum Telefon. Eine dynamische Zuordnung von CTI-Diensten innerhalb einer XMPP Umgebung ist dabei nicht vorgesehen. Die Übertragung bzw. Verknüpfung des Telefons (z.B.: on Phone - telefoniert) erfolgt bei XMPP basierenden Client/Server Architekturen wenn überhaupt manuell. Da CSTA eine eindeutige Invoke-ID für jeden einzelnen Service benötigt, stellt sich zunächst die Aufgabe der Umsetzung einer clientspezifischen, über XMPP erzeugten CSTA InvokelD auf eine eindeutige CSTA spezifische InvokelD.

Hierzu soll vorzugsweise eine Zuordnung ("ein Mapping") der CSTA spezifischen InvokeID auf das Tupple Jabber ID (JID) des XMPP Clients und der XMPP SessionID erfolgen. Dieses Mapping ermöglicht es, eine eindeutige Zuordnung zur CSTA Invoke ID zu erhalten ohne die Übertragung und Synchronisierung der CSTA Invoke ID innerhalb von XMPP zu fordern.

Die Vermittlungsstelle PBX und der XMPP-Server (XS) werden mittels eines Call Control Gateways (CCGW) verbunden. Das CCGW ist die Verbindung zwischen der CTI einer PBX und dem XMPP-Server. Über dieses Call Control Gateway kann ein XMPP Client CTI Dienste abonnieren und zur Verfügung stellen. Hierbei handelt es sich in einer Ausführungsform um die in ECMA-269 beschriebenen CSTA Call Control Services und Events.

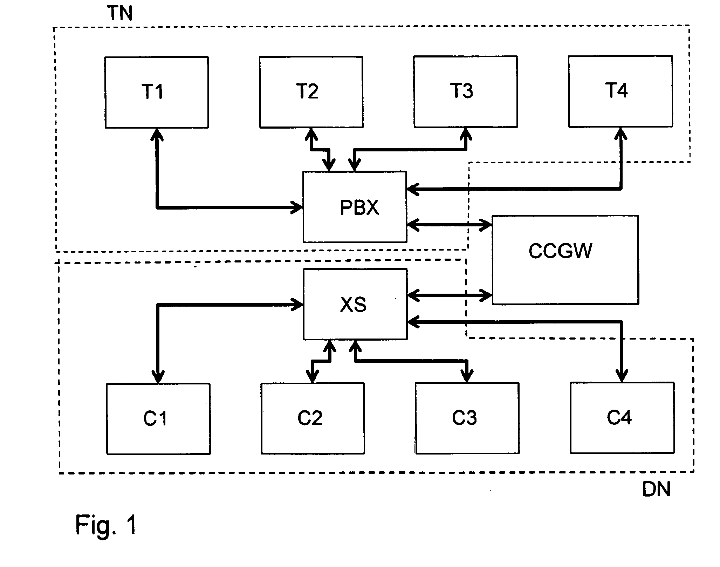

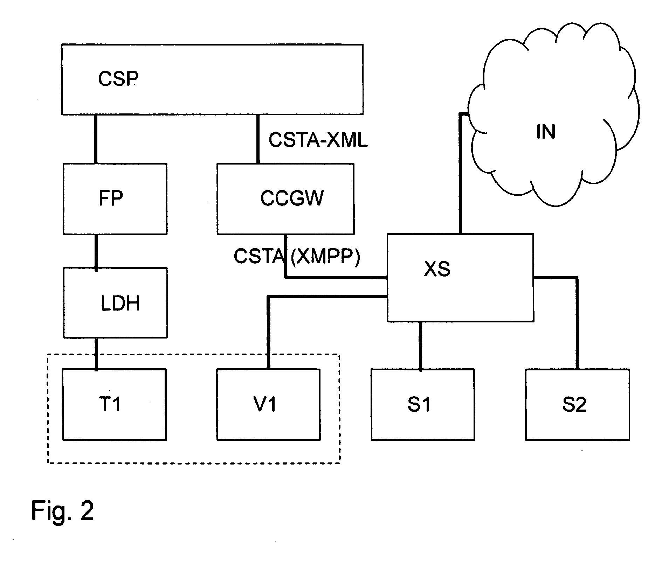

Die Figuren 1 und 2 zeigen schematisch die Einbettung des CCGW in das Gesamtsystem. Figur 2 zeigt insbesondere eine Einbettung des CCGW in das Gesamtsystem, die ausgeführt ist am Beispiel der OpenScape Office MX.

Wie in Figur 1 gezeigt, erfolgt die Integration von Funktionen eines aus Telekommunikationsendgeräten T1, T2, T3, T4 und einem Vermittlungssystem PBX und ggf. weiteren Komponenten aufgebauten Telekommunikationsnetzes TN in ein Datennetz DN, indem ein Vermittlungssystem PBX des Telekommunikationsnetzes mit einem IM-Server XS des Datennetzes, in dem die Clients C1, C2, C3 und C4 über den IM-Server XS kommunizieren, über eine Einrichtung CCGW verbunden wird, mit deren Hilfe der IM-Server in die Lage versetzt wird, Computer-Telefonie-Integrations-Dienste des Vermittlungssystems PBX einem Kommunikationsteilnehmer des Datennetzes zur Verfügung zu stellen.

Auf der einen Seite erfolgt die Anbindung an das Feature Processing FP via CSTA XML hier mittels eines sogenannten CSTA Service Providers (CSP). Auf der anderen Seite wird CSTA über XMPP an den XMPP Server XS übertragen. Mittels des CCGW kann ein XMPP Client S1, S2 CTI Dienste abonnieren. Die Kommunikation zwischen dem CCGW und dem XMPP Server kann als eine Server-Server oder Server-Client Anbindung als auch über eine Serverkomponente gemäß XEP 0114 oder einem anderen zu XEP 0114 vergleichbaren Jabber Component Protocol ausgeführt werden.

Der IM-Server XS stellt in dem in der Figur 2 gezeigten Beispiel auch eine Verbindung der Clients S1, S2 zu dem Internet IN her. V1 bezeichnet eine Visualisierung (also beispielsweise die grafische Aufbereitung von evtl. vorhandenen Rufweiterleitungen oder ähnliches) der Kommunikation auf dem Endgerät T1.

In CSTA (im Ausführungsbeispiel gemäß der Figur 2 repräsentiert durch den CSP) wird zur Zuordnung eines Requests zur zugehörigen Response die sogenannte InvokelD verwendet. Diese InvokeID sollte über alle Requests eindeutig sein um eine fehlerfreie Zuordnung zu gewährleisten.

Zum Transport von CSTA über XMPP können IQ Stanzas (XMPP IQ Nachrichten) verwendet werden, die einen ähnlichen Request-Response-Mechanismus aufweisen wie CSTA ihn verwendet. Genau wie bei CSTA wird hier ebenfalls eine ID zur Zuordnung genutzt, die bei XMPP Session-ID heißt. CSTA-Requests, die von einem XMPP-Client (im Ausführungsbeispiel gemäß der Figur 2 durch S1, S2 dargestellt) über XMPP transportiert werden, werden vom CCGW entgegengenommen, und die CSTA-Nachricht der IQ-Stanza entnommen, und vorteilhaft mit einer bisher ungenutzten InvokelD versehen und an den CSP übermittelt. Das CCGW speichert zudem die Full-Jabber ID, die XMPP Session ID und die vergebene CSTA InvokelD. Somit wird es vermieden beim Transport von CSTA über XMPP eine CSTA InvokelD zu transportieren, da das CCGW seinerseits dafür sorgt, dass die CSTA InvokelDs zwischen ihm und dem CSP eindeutig sind.

Die Kombination aus Full-Jabber ID, XMPP Session ID und CSTA InvokelD ermöglicht ein eindeutiges Mapping einer CSTA-Nachricht, die das CCGW vom CSP erhält. Die Verwendung des oben beschriebenen Mappings ermöglicht es die CSTA-Response an den XMPP-Client zu schicken, der auch das CSTA-Request geschickt hat.

Die oben aufgeführte XMPP Session ID wird vom XMPP Client generiert und kann frei gewählt werden. Die einzige Einschränkung bei der Wahl der Session ID, besteht in der notwendigen Eindeutigkeit, wobei die Eindeutigkeit nur für einen XMPP Client gegeben sein muss, verschiedene XMPP Clients dürfen auch gleichzeitig dieselbe Session ID verwenden. Bei Verwendung der Full-Jabber werden XMPP IQ Nachrichten an einen Client gesendet, ansonsten beantwortet der XMPP Server selbst.

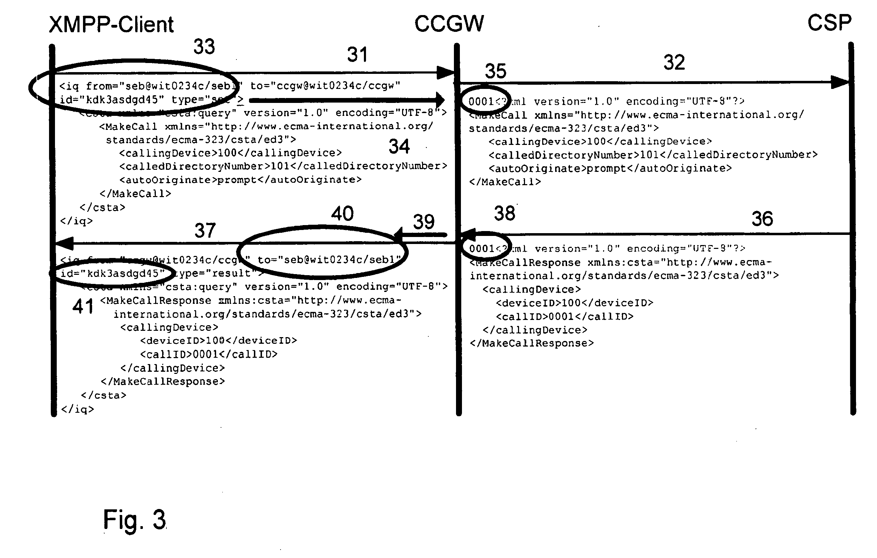

In dem in Figur 3 gezeigten Ausführungsbeispiel wird die dynamische Zuordnung der XMPP Jabber ID und XMPP Session ID 33 zur CSTA Invoke ID 35 exemplarisch dargestellt. Bei der Kommunikation 32 des CCGW mit dem CSP wird vom CCGW jede CSTA Nachricht mit einer CSTA InvokelD 35 versehen. Diese CSTA InvokeID 38 ist dann in der entsprechenden Antwort 36 des CSP vorhanden um eine eindeutige Zuordnung der Response 37 zum zugehörigen Request 31 fürs CCGW zu ermöglichen. Da das CCGW gleichzeitig mit mehr als einem XMPP Client kommunizieren kann, sollte eine erhaltene Response 36 auch an den richtigen XMPP Client weitergeleitet werden.

Um eine korrekte Zuordnung der CSTA Services zum XMMP Client zu ermöglichen führt das CCGW eine Zuordnung ("ein Mapping") zwischen der CSTA InvokelD 35, 38 und dem Tupple Jabber ID 40 und der Session ID 41 durch, indem bei jedem eingehenden CSTA Request 31 von einem XMPP Client eine CSTA InvokelD 35 für diesen Request vergeben und diese in Verbindung mit der Jabber ID 40 des XMPP Clients und der von ihm vergebenen Session ID 41 gespeichert wird. Daraufhin wird das CSTA Request aus der XMPP Nachricht entnommen, die zugeordnete CSTA InvokelD hinzugefügt und an den CSP geschickt.

Erhält das CCGW eine CSTA Response 36 vom CSP, so wird die CSTA lnvokelD 38 aus der Response isoliert und dann dazu genutzt, in den gespeicherten Daten nach dem ursprünglichen Absender 40 des Requests 31 zu suchen. Sind eine Session ID 41 und eine JabberlD (JID) 40 für die erhaltene CSTA InvokelD 38 hinterlegt, so wird die CSTA Response36 ohne die CSTA InvokelD in eine IQ Stanza 39 verpackt, mit der gespeicherten Session ID 41 versehen und an die ermittelte Jabber ID 40 verschickt. Abschließend kann die gespeicherte Zuordnung von Jabbber ID, SessionID und CSTA InvokelD gelöscht werden und die CSTA InvokelD steht daher für eine erneute ggf. andere Verwendung zur Verfügung.

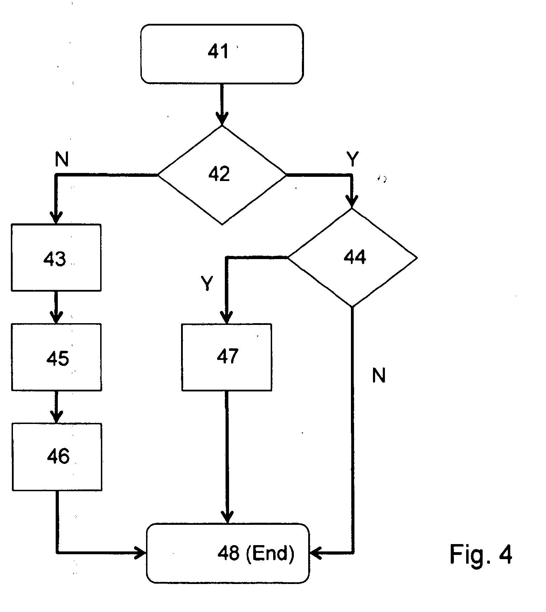

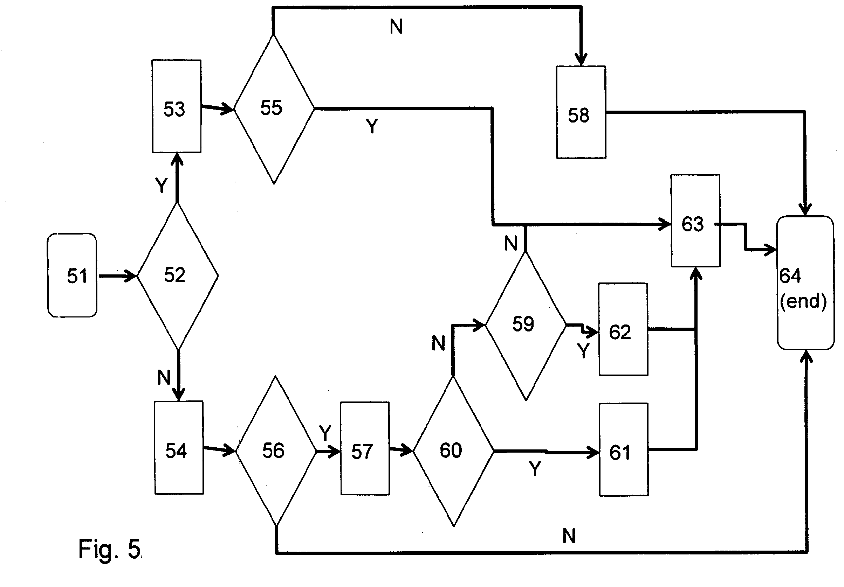

Das CCGW stellt für die Anbindung an die PBX eine Verbindung zum CSP her. Über diese eine Verbindung werden alle CSTA Services und Events aller beteiligten CSTA fähigen XMPP Clients abgewickelt. Dies bedeutet, dass das CCGW die CSTA Events aller XMPP Clients erhält und dann entscheiden muss an welchen XMPP Client das erhaltene CSTA Event weitergeleitet werden muss. Ähnliches gilt für CSTA Service Responses, da das CCGW von allen angebunden XMPP Clients CSTA Service Requests entgegennimmt und an den CSP weiterleitet, treffen auch beim CCGW die entsprechenden CSTA Service Responses ein. Nach Erhalt einer solchen CSTA Service Response muss das CCGW bewerkstelligen, dass die CSTA Service Response per XMPP auch an den Absender des zugehörigen CSTA Service Requests zugestellt wird. Das Vorgehen des CCGW nach dem Empfang von Nachrichten per XMPP bzw. über die Verbindung zum CSP wird in den Figuren 4 und 5 dargestellt. Eine detaillierte Beschreibung wie eine Zuordnung von CSTA Service Responses und CSTA Events zu den korrekten XMPP Nutzern erfolgt befindet sich in den nächsten beiden Unterkapiteln.

Bei dem Transport von CSTA über XMPP wird die CSTA InvokelD vorzugsweise nicht mit übertragen weil die InvokelD sich bei einer Vielzahl von CSTA fähigen XMPP Clients überschneiden können. Falls zwei unabhängige CSTA fähige XMPP Clients zeitgleich einen CSTA Service Request über XMPP ans CCGW senden und zufälligerweise die identische InvokelD verwenden, so kann das CCGW nicht beide CSTA Service Requests unverändert an den CSP weiterleiten, da sonst keine eindeutige Zuordnung der CSTA Service Response zu dem entsprechenden XMPP Client möglich ist.

Um dieses Problem der fehlenden Eindeutigkeit zu umgehen vergibt das CCGW vorzugsweise eigenständig CSTA InvokelDs für alle Requests, die es zum CSP weiterleitet. Alle aktuell vergebenen InvokelDs werden in einer Liste hinterlegt und um die JabberlD des Absenders und die vom Absender vergebenen XMPP SessionlD ergänzt. Auch wenn es wünschenswert sein mag, XMPP ausschließlich als Transportmittel für CSTA zu verwenden, ist doch ein Eingriff über den eigentlichen Transport hinaus unvermeidlich, um die korrekte Zustellung von CSTA-Responses über XMPP zu ermöglichen.

Erhält das CCGW nun eine CSTA Service Response vom CSP, so wird anhand der InvokelD der CSTA Service Response aus der Liste aller InvokelDs diejenige JabberlD, an die die Response weitergeleitet werden muss und welche XMPP SessionlD zu verwenden ist, ermittelt. Nach dem Weiterleiten der CSTA Service Response über XMPP kann der Datensatz aus CSTA InvokeID, JabberID und XMPP SessionID gelöscht werden. Die CSTA InvokeID steht nun für eine erneute Nutzung zur Verfügung. Wie aus dem oben beschriebenen Beispiel zu entnehmen ist, ist die Übertragung der InvokelD vom CSTA fähigen XMPP Client zum CCGW nicht notwendig, da diese nicht für die Zustellung der Responses verwendet wird.

Die Zustellung von CSTA Events über XMPP bereitet ähnliche Probleme wie die Zustellung von CSTA Service Responses. Ein Unterschied besteht jedoch darin, dass im Vorfeld eines Events nicht immer ein CSTA Service Request durch das CCGW versendet wird. Stattdessen werden alle CSTA Events mit der InvokeID 9999 gekennzeichnet. Eine Zuordnung eines CSTA Events zu einem XMPP-Nutzer ist also nicht möglich, stattdessen wird im CCGW eine weitere Liste benötigt. In dieser Liste wird einer CSTA CrossReflD eine XMPP JabberlD zugeordnet.

Erhält nun das CCGW vom CSP eine CSTA Nachricht mit der InvokelD 9999, so kann es diese Nachricht als CSTA Event identifizieren. In einem anschließenden Schritt wird die CSTA CrossReflD des Events gesucht und mit deren Hilfe und der Liste von bekannten CrossReflDs lässt sich dann die JabberlD ermitteln, an die das Event weiterzuleiten ist. Um die Liste der bekannten CrossReflDs überhaupt füllen zu können, müssen alle CSTA Service Responses darauf überprüft werden, ob es sich um eine MonitorStartResult Service Response handelt. Ist dies der Fall, so wird die CrossReflD aus der Nachricht isoliert und in Verbindung mit der JabberlD, an die die CSTA Service Response weitergeleitet wird, in die Liste der bekannten CrossReflDs aufgenommen.

Anschließend wird die CSTA Service Response ganz gewöhnlich per XMPP zugestellt. Damit die Liste der bekannten CrossRefIDs nicht unnötig anwächst, werden CSTA Service Responses auch auf MonitorStopResult überprüft. Sollte dies der Fall sein, so wird auch hier die CSTA CrossReflD ermittelt und daraufhin wird der entsprechende Eintrag aus der Liste der bekannten CrossReflDs entfernt. Optional kann vom CCGW automatisch ein MonitorStop an den CSP gesendet werden, falls die CrossReflD eines eintreffenden CSTA Events nicht in der Liste der bekannten CrossReflDs vorhanden sein sollte, um so den Erhalt von weiteren, nicht zustellbaren Events zu unterbinden.

Falls ein CSTA fähiger XMPP Client zwischen dem Versenden einer Serviceanfrage und dem Erhalt der Serviceresponse, oder aber wenn er zu dem Zeitpunkt, zu dem der CSP ihm ein Event zustellen möchte, plötzlich nicht mehr verfügbar ist, greift der Mechanismus der iq Stanza. Der XMPP Server wird dem CCGW stellvertretend für den angesprochenen XMPP Client, der nicht mehr verfügbar ist, mit einer iq Stanza vom Typ error antworten. Dies gibt dem CCGW die Möglichkeit abonnierte Events des entsprechenden Nutzers, mit Hilfe der Liste, der bekannten CrossReflDs, aufzuheben und so unnötig übertragenen Events zu unterbinden. Anstatt abzuwarten bis ein Event auftritt ist es auch mögliche direct presence zu verwenden und so noch schneller zu erkennen, dass ein CSTA fähiger XMPP Client unerwartet nicht mehr verfügbar ist.

Jeder XMPP Nutzer verfügt über ein vom Server verwaltetes Roster. Dieses Roster ist eine Freundes- oder Kontaktliste in die der Nutzer weitere XMPP Nutzer aufnehmen kann. Gleichzeitig wird über das Roster verwaltet mit welchen XMPP Nutzern der Rosterinhaber seinen Anwesenheitsstatus (presence) teilen möchte (Details siehe RFC-6120). Befindet sich ein XMPP Nutzer nicht im Roster eines anderen XMPP Nutzers, so wird dieser auch nicht automatisch über dessen Anwesenheit bzw. die Änderung des Anwesenheitsstatus des Rosterinhabers informiert. Eine Möglichkeit dennoch einen anderen XMPP Nutzer über die eigene Anwesenheitsstatus zu Informieren besteht darin, wenn der Rosterinhaber einen anderen XMPP Nutzer den eigenen Anwesenheitsstatus direkt zuschickt (direct presence). Die Besonderheit besteht dabei weiterhin darin, dass der Adressat der direct presence nicht automatisch über weitere Statuswechsel informiert wird, mit Ausnahme davon, wenn der Rosterinhaber sich vom XMPP Server abmeldet (oder die Verbindung zwischen diesem und dem XMPP Server verloren geht).

Um dies zu ermöglichen muss jeder CSTA fähige XMPP Client im Laufe seiner Anmeldung beim CCGW eine direct presence an dieses schicken. Diese presence Stanza kann das CCGW ignorieren. Wichtig wird es jedoch, wenn der Client sich von seinem XMPP Server abmeldet und das CCGW daher die presence Stanza mit dem Typ unavailable erhält, auch ohne im Roster des XMPP Nutzers zu sein. Sobald das CCGW eine solche presence Stanza erhält kann es wie bereits im vorherigen Absatz beschrieben dafür sorgen, dass die eventuell vorhandenen Monitorpunkte des entsprechenden XMPP Nutzers aufgehoben werden.

Die Verwendung einer einheitlichen und standardisierten Stanza für den Transport von CSTA über XMPP sorgt für eine transparente Übertragung von CSTA-XML. Das konsequente Anwenden von standardisierten Elementen wie der iq Stanza und weiteren XMPP und CSTA Protokollparametern sowie der vollständige Verzicht auf proprietäre Erweiterungen sind ein Indiz für die Stabilität der erfindungsgemäßen Architektur.

Die Figur 4 zeigt den Ablauf der Weiterleitung einer vom CCGW empfangenen iq-Stanza an den CSP. Nach dem Empfang 41 einer iq-Stanza vom Namespace csta:query per XMPP wird geprüft 42, ob die Stanze den Typ "Error" hat. Ist dies der Fall, erfolgt eine Prüfung 44, ob der Absender Monitorpunkte hat. Ist dies nicht der Fall, ist der Ablauf beendet 48. Andernfalls erfolgt 47 ein Senden von MonitorStop für jeden Monitorpunkt an den CSP. Danach ist der Ablauf ebenfalls beendet. Hat die Prüfung 42 ein negatives Ergebnis, wird eine freie InvokelD ermittelt 43. Anschließend werden die Session ID und die JabberlD bei gewählter InvokelD hinterlegt 45. Schließlich erfolgen die Vorbereitung und der Versand 46 der Nachricht an den CSP. Danach ist der Ablauf beendet 48.

In dem in der Figur 5 gezeigten Ablauf erfolgt nach dem Empfang 51 der CSTA-Nachricht durch den vom CSP eine Prüfung 52, ob die InvokelD den Wert 9999 hat. Ist dies der Fall, so handelt es sich um ein Event, welches eine CrossReflD enthält. Mit Hilfe dieser CrossReflD erfolgt eine Suche 53 in der Liste der bekannten CrossReflDs nach einer JabberlD. Bringt die Prüfung 55, ob eine CrossReflD gefunden wurde ein positives Ergebnis, erfolgt 63 die Vorbereitung und der Versand der Nachricht per XMPP. Anschließend ist der Ablauf beendet 64. Bringt die Prüfung 55, ob eine CrossReflD gefunden wurde ein negatives Ergebnis, erfolgt 58 das Senden eines MonitorStops mit dieser CrossRefID an den CSP. Anschließend ist der Ablauf beendet 64.

Ergibt die Prüfung 52, ob die InvokeID den Wert 9999 hat ein negatives Ergebnis, dann wird 54 die Jabberld und die SessionID über die InvokelD ermittelt. Wird eine InvokelD gefunden 56, dann wird diese InvokeID für eine erneute Verwendung freigegeben 57. Andernfalls ist der Ablauf beendet 64. Nach der Freigabe 57 der InvokelD für eine erneute Verwendung erfolgt eine Prüfung 60, ob der erhaltene CSTA Service in MonitorStartResult ist. Ist dies der Fall, dann werden die CrossReflD und die JabberlD in die Liste der Monitorpunkte eingefügt 61. Ist dies nicht der Fall, dann erfolgt eine Prüfung 59, ob der erhaltene CSTA Service in MonitorStopResult ist. Ist dies der Fall, dann werden die CrossReflD und die JabberlD aus der Liste der Monitorpunkte gelöscht 62. Anschließend erfolgt 63 die Vorbereitung und der Versand der Nachricht per XMPP. Danach ist der Ablauf beendet 64.

## Patentansprüche

1. Verfahren zur Integration von Funktionen eines Telekommunikationsnetzes (TN) in ein Datennetz (DN), bei dem ein Vermittlungssystem (PBX) des Telekommunikationsnetzes mit einem IM-Server (XS) des Datennetzes über eine Einrichtung (CCGW) verbunden wird, mit deren Hilfe der IM-Server in die Lage versetzt wird, Computer-Telefonie-Integrations-Dienste des Vermittlungssystems (PBX) einem Kommunikationsteilnehmer des Datennetzes zur Verfügung zu stellen, **dadurch gekennzeichnet, dass**
a) der IM-Server in die Lage versetzt wird, Computer-Telefonie-Integrations-Dienste des Vermittlungssystems (PBX) einem Kommunikationsteilnehmer des Datennetzes zur Verfügung zu stellen, indem er einen IM-Client (XC) in die Lage zu versetzt, solche Computer-Telefonie-Integrations-Dienste des Vermittlungssystems (PBX) zu abonnieren, und dass
b) der IM-Client ein XMPP-Client ist, und die Einrichtung (CCGW) eine dynamische Zuordnung zwischen einer CSTA-spezifischen InvokelD (CSTA-IID) einerseits und einem Jabber-Identifier (JID) des IM-Clients und/oder einer XMPP-SessionID (XSID) bewirkt.

2. Verfahren nach Anspruch 1, bei dem die Einrichtung (CCGW) eine Zuordnung zwischen einer CSTA-spezifischen InvokelD (CSTA-IID) einerseits und einem Jabber-Identifier (JID) des IM-Clients und einer XMPP-SessionlD (XSID) bewirkt.

3. Verfahren nach einem der vorhergehenden Ansprüche, bei dem die Kommunikation zwischen der Einrichtung (CCGW) und dem IM-Server als eine Server-Server-Anbindung ausgeführt wird.

4. Verfahren nach einem der vorhergehenden Ansprüche, bei dem die Kommunikation zwischen der Einrichtung (CCGW) und dem IM-Server als eine Server-Client-Anbindung ausgeführt wird.

5. Verfahren nach einem der vorhergehenden Ansprüche, bei dem die Kommunikation zwischen der Einrichtung (CCGW) und dem IM-Server über eine Serverkomponente gemäß XEP 0114 oder einem anderen zu XEP 0114 vergleichbaren Jabber-Component-Protocol ausgeführt wird.

6. Verfahren nach einem der vorhergehenden Ansprüche, bei dem zur Zuordnung eines Requests zur zugehörigen Response die sogenannte Invoke-ID verwendet wird.

7. Verfahren nach Anspruch 6, bei dem die zur Zuordnung eines Requests zur zugehörigen Response verwendete Invoke-ID über alle Requests eindeutig ist.

8. Verfahren nach einem der vorhergehenden Ansprüche, bei dem zum Transport von CSTA über XMPP IQ-Stanzas verwendet werden, die einen Request-Response-Mechanismus aufweisen, der dem von CSTA verwendeten Request-Response-Mechanismus vergleichbar ist.

9. Verfahren nach einem der vorhergehenden Ansprüche, bei dem ein IM-Client eine XMPP-Session-ID generiert, die von anderen XMPP-Session-IDs desselben IM-Clients verschieden ist.

## Claims

1. Method for integrating functions of a telecommunications network (TN) into a data network (DN), in which a switching system (PBX) of the telecommunications network is connected to an IM server (XS) of the data network via a device (CCGW), by means of which the IM server is made capable of providing computer telephony integration services of the switching system (PBX) to a communications subscriber of the data network, **characterised in that**
a) the IM server is made capable of providing computer telephony integration services of the switching system (PBX) to a communications subscriber of the data network by making an IM client (XC) capable of subscribing to such computer telephony integration services of the switching system (PBX), and **in that**
b) the IM client is an XMPP client, and the device (CCGW) effects a dynamic allocation between a CSTA-specific InvokelD (CSTA-IID) on the one hand and a Jabber Identifier (JID) of the IM client and/or an XMPP SessionlD (XSID).

2. Method according to claim 1, in which the device (CCGW) effects an allocation between a CSTA-specific InvokelD (CSTA-IID) on the one hand and a Jabber Identifier (JID) of the IM client and an XMPP SessionID (XSID).

3. Method according to any one of the preceding claims, in which the communication between the device (CCGW) and the IM server is embodied as a server-server connection.

4. Method according to any one of the preceding claims, in which the communication between the device (CCGW) and the IM server is embodied as a server-client connection.

5. Method according to any one of the preceding claims, in which the communication between the device (CCGW) and the IM server is carried out via a server component according to XEP 0114 or another Jabber Component Protocol comparable to XEP 0114.

6. Method according to any one of the preceding claims, in which, in order to match a request to the associated response, use is made of the so-called Invoke ID.

7. Method according to claim 6, in which the Invoke ID used to match a request to the associated response is unique among all requests.

8. Method according to any one of the preceding claims, in which, for transporting CSTAs via XMPP, use is made of IQ stanzas which have a request-response mechanism comparable to the request-response mechanism used by CSTAs.

9. Method according to any one of the preceding claims, in which an IM client generates an XMPP Session ID that is different from other XMPP Session IDs of the same IM client.

## Revendications

1. Procédé d'intégration de fonctions d'un réseau de télécommunication (TN) dans un réseau de données (DN), dans le cadre duquel un système de commutation (PBX) du réseau de télécommunication est relié à un serveur de messagerie instantanée (XS) du réseau de données par l'intermédiaire d'un équipement (CCGW), à l'aide duquel le serveur de messagerie instantanée est amené à pouvoir mettre à la disposition d'un abonné de communication du réseau de données des services de couplage téléphonie informatique du système de commutation (PBX), **caractérisé en ce que**
a) le serveur de messagerie instantanée est amené à pouvoir mettre à la disposition d'un abonné de communication du réseau de données des services de couplage téléphonie information du système de commutation (PBX), **en ce qu'**il met un client de messagerie instantanée (XC) en position de s'abonner à des services de couplage téléphonie informatique de ce type du système de commutation (PBX), et **en ce que**
b) le client de messagerie instantanée est un client XMPP, et **en ce que** l'équipement (CCGW) entraîne une attribution dynamique entre un identifiant Invoke-ID spécifique au CSTA (CSTA-IID) d'une part et un identifiant Jabber (JID) du client de messagerie instantanée et/ou un identifiant de session XMPP (XSID).

2. Procédé selon la revendication 1, dans le cadre duquel l'équipement (CCGW) entraîne une attribution entre un identifiant Invoke-ID spécifique au CSTA (CSTA-IID) d'une part et un identifiant Jabber (JID) du client de messagerie instantanée et un identifiant de session XMPP (XSID).

3. Procédé selon l'une quelconque des revendications précédentes, dans le cadre duquel la communication entre l'équipement (CCGW) et le serveur de messagerie instantanée est exécutée sous la forme d'une liaison serveur - serveur.

4. Procédé selon l'une quelconque des revendications précédentes, dans le cadre duquel la communication entre l'équipement (CCGW) et le serveur de messagerie instantanée est exécutée sous la forme d'une liaison serveur - client.

5. Procédé selon l'une quelconque des revendications précédentes, dans le cadre duquel la communication entre l'équipement (CCGW) et le serveur de messagerie instantanée est exécutée selon le protocole XEP 0114 ou selon un autre protocole de composants Jabber comparable XEP 0114 par l'intermédiaire d'un composant de serveur.

6. Procédé selon l'une quelconque des revendications précédentes, dans le cadre duquel ce qu'on appelle l'identifiant Invoke-ID est utilisé pour attribuer une requête à une réponse associée.

7. Procédé selon la revendication 6, dans le cadre duquel l'identifiant Invoke-ID utilisé pour attribuer une requête à une réponse associée pour toutes les requêtes est sans équivoque.

8. Procédé selon l'une quelconque des revendications précédentes, dans le cadre duquel on utilise pour le transport de CSTA en passant par XMPP des IQ-stanzas, qui présentent un mécanisme requête-réponse, qui est comparable au mécanisme requête-réponse utilisé par le protocole CSTA.

9. Procédé selon l'une quelconque des revendications précédentes, dans le cadre duquel un client de messagerie instantanée génère un identifiant de session XMPP, qui diffère des autres identifiants de session XMPP du même client de messagerie instantanée.
